# DEMANDE DE BREVET EUROPEEN

(11) **EP 4 734 400 A1**
(43) Date de publication de la demande: **29.04.2026**
(21) Numéro de dépôt: 25211074.7
(22) Date de dépôt: 24.10.2025
(51) Int. Cl.: H04B 10/118, H04B 10/29, H04B 10/532

(54) **EMETTEUR, RÉCEPTEUR, CHAÎNE DE TRANSMISSION ET PROCÉDÉ DE TRANSMISSION D'INFORMATION ASSOCIÉS**

(30) Priorité: 25.10.2024 FR 2411697
(71) Demandeur: THALES, 92190 Meudon (FR)
(72) Inventeur: BENADDI, Tarik, 31100 TOULOUSE (FR); POTIER, Philippe, Louis, François, 31100 TOULOUSE (FR); LECOINTRE, Aubin Michel, 31100 TOULOUSE (FR)
(74) Mandataire: Lavoix

(57) **Abrégé**

**La présente** invention concerne un émetteur (4), comprenant :
- un modulateur optique (14), configuré pour moduler un signal électrique (Sₑₗ) en un signal optique (S) comprenant une première polarisation selon un premier axe de polarisation et une deuxième polarisation selon un deuxième axe de polarisation ;
- un module de rotation optique (16), configuré pour générer un signal optique tourné (Sₜ) en effectuant une rotation des première et deuxième polarisations ;
- un module amplificateur (18), comprenant :
∘ un séparateur de faisceau de polarisation, configuré pour séparer le signal optique tourné en une première composante optique selon le premier axe de polarisation et en une deuxième composante optique selon le deuxième axe de polarisation;
∘ un premier amplificateur optique, configuré pour amplifier la première composante optique ;
∘ un deuxième amplificateur optique, configuré pour amplifier la deuxième composante optique ; et
∘ un combineur de faisceaux de polarisation.

## Description

La présente invention concerne un émetteur, un récepteur, une chaîne de transmission, ainsi qu'un procédé de transmission d'information associés.

Le développement de nouveaux services de télécommunication, nécessitant des débits importants, la concurrence des réseaux terrestres avec le déploiement de la technologie 400 Gbit/s et au-delà, ainsi que la volonté de réduire la fracture numérique en permettant à tout citoyen, où qu'il soit, de bénéficier de la même qualité de service, ont causé une augmentation considérable des besoins en capacité de transmission des opérateurs satellites, nécessitant le déploiement de systèmes supplémentaires.

Face à une telle demande de capacité, les technologies traditionnelles fonctionnant par radio fréquences atteignent leurs limites. Dans ce contexte, les technologies optiques, capitalisant sur les développements des télécommunications terrestres par fibre optique à très haut débit, constituent une alternative pour la transmission de données à très haut débit. En particulier, les communications optiques en espace libre bord-sol sont une solution prometteuse pour la future génération de satellites à très haut débit.

Cependant, le canal optique satellitaire présente plusieurs inconvénients. En particulier, on observe une forte dégradation du signal à cause de la composition des couches de l'atmosphère et des turbulences. Ces phénomènes causent des évanouissements profonds interrompant ainsi la transmission entre un émetteur et un récepteur pendant plusieurs millisecondes.

Pour compenser ce problème, on a recours à des amplificateurs optiques à très haute puissance à l'émetteur afin d'amplifier le signal optique avant transmission en espace libre. Par ailleurs, le signal optique est transmis sur deux polarisations par longueur d'onde afin d'augmenter l'efficacité spectrale. Dans ce cas, l'utilisation d'un amplificateur optique par polarisation est courante. Cependant, une amplification inégale entre les deux amplificateurs entraîne une disparité dans l'amplification des deux polarisations, ce qui compromet la qualité du signal optique et, par conséquent, la qualité de la transmission.

De manière plus générale, les fibres optiques, les séparateurs de polarisation, ou PBS, de l'anglais « Polarization Beam Splitter » et combineurs de polarisation ou PBC, de l'anglais « Polarization Beam Combiner » utilisés dans les systèmes de télécommunications par fibres optiques peuvent également causer des disparités dans l'amplitude des deux polarisations du signal, et diminuer la qualité de la transmission.

Pour corriger l'amplification inégale des polarisations, différentes approches ont été explorées, telles que l'utilisation d'algorithmes de traitement du signal, de pré-codage numérique au niveau de l'émetteur et de décodage au niveau du récepteur, par exemple via un code temporel de polarisation, ou PTC, de l'anglais « Polarization Time Code », un entrelacement sur les deux polarisations, ou un asservissement analogique des gains des amplificateurs. Cependant, ces solutions ont tendance à accroître la complexité des algorithmes nécessaires pour le traitement du signal optique aussi bien coté émetteur que récepteur ou à accroître la complexité d'une tête optique, en anglais « optical front end » également connue sous le nom de module d'interface air, présente dans l'émetteur pour émettre le signal optique à destination du récepteur et dans le récepteur pour le recevoir le signal optique émis par l'émetteur.

D'autres solutions comme le mélange des polarisations à l'aide d'un mélangeur de polarisation sont connues, mais nécessitent un contrôle actif qui augmente la puissance électrique consommée par l'émetteur.

Le but de l'invention est alors d'améliorer la transmission d'un signal optique, de manière simple et en limitant la puissance électrique consommée.

A cet effet, l'invention a pour objet un émetteur, configuré pour convertir des données numériques d'entrée en signal optique amplifié et pour émettre le signal optique amplifié, l'émetteur comprenant :
- un modulateur optique, configuré pour moduler un signal électrique représentatif des données numériques d'entrée en un signal optique comprenant une première polarisation selon un premier axe de polarisation et une deuxième polarisation selon un deuxième axe de polarisation, le signal optique étant représentatif des données numériques d'entrée ;
- un module de rotation optique, configuré pour générer un signal optique tourné en effectuant une rotation des première et deuxième polarisations du signal optique selon un angle de rotation prédéfini, compris strictement entre 0+kπ/2 et π/2+kπ/2 , avec k un nombre entier ; et
- un module amplificateur, comprenant :
   ∘ un séparateur de faisceau de polarisation, configuré pour séparer le signal optique tourné en une première composante optique selon le premier axe de polarisation et en une deuxième composante optique selon le deuxième axe de polarisation;
   ∘ un premier amplificateur optique, configuré pour amplifier la première composante optique selon un premier gain prédéfini ;
   ∘ un deuxième amplificateur optique, configuré pour amplifier la deuxième composante optique selon un deuxième gain prédéfini ; et
      ∘ un combineur de faisceaux de polarisation, configuré pour recevoir la première et la deuxième composantes optiques, amplifiées respectivement par le premier et le deuxième amplificateur optique, et pour les combiner en un signal optique amplifié.

Grâce à cette invention, lorsque le séparateur de polarisation sépare le signal optique tourné, il divise le signal en deux composantes optiques, grâce à l'insertion préalable de la rotation selon un angle de rotation compris strictement entre 0+kπ/2 et π/2+kπ/2 avec k entier. Chacune de ces composantes comprend à la fois les deux polarisations du signal optique. Ainsi, les différences d'amplification causées par les disparités entre le premier et le deuxième amplificateur optique sont appliquées aux deux composantes optiques de manière équivalente. Cela permet de limiter les variations d'amplification entre les deux polarisations du signal optique. En résumé, cette invention permet une amplification équilibrée des deux polarisations du signal optique.

Il n'est pas nécessaire d'appliquer des traitements algorithmiques ou numériques complexes pour compenser une différence d'amplification entre les amplificateurs optiques. Ainsi, l'émetteur permet l'émission du signal optique amplifié de manière simple. De plus, le module de rotation est un élément passif, qui ne consomme pas d'électricité. La puissance électrique consommée par l'émetteur est donc limitée.

Suivant d'autres aspects avantageux de l'invention, l'émetteur comprend une ou plusieurs des caractéristiques suivantes, prises isolément ou suivant toutes les combinaisons techniquement possibles :
- Un module de traitement numérique, configuré pour convertir les données numériques d'entrée en le signal électrique, représentatif des données numériques d'entrée.
- Une tête optique comprenant au moins l'un des dispositifs suivants : un dispositif de collimation, un dispositif de pointage et un dispositif de compensation de turbulences.
- Le modulateur optique est configuré pour transmettre le signal optique au module de rotation, et le module de rotation est configuré pour transmettre le signal optique tourné au module amplificateur via une fibre à maintien de polarisation.
- Le module de rotation optique comprend un cristal biréfringent.
- L'angle de rotation est compris entre π/6+kπ/2 et π/3+kπ/2, préférentiellement sensiblement égal à π/4+kπ/2 avec k un nombre entier.

L'invention concerne également un récepteur adapté pour recevoir le signal optique amplifié émis par l'émetteur et pour le convertir en données numériques de sortie.

La réception et la conversion du signal optique amplifié ne nécessitent pas de traitements numériques ou algorithmiques complexes.

Suivant d'autres aspects avantageux de l'invention, le récepteur comprend la caractéristique suivante :
- une tête optique, configurée pour recevoir le signal optique amplifié, le signal optique amplifié reçu étant dit signal optique reçu ;
- un module amplificateur, configuré pour amplifier le signal reçu en signal optique reçu amplifié ;
- un démodulateur optique, configuré pour convertir le signal optique reçu amplifié en un signal électrique reçu ; et
- un module de traitement numérique, configuré pour implémenter un algorithme d'égalisation adaptatif et convertir le signal électrique reçu en les données numériques de sortie.

L'invention concerne également une chaîne de transmission comprenant l'émetteur et le récepteur.
L'invention concerne également un procédé de transmission d'information, mis en œuvre par une chaîne de transmission décrite précédemment, le procédé comprenant au moins les étapes suivantes :
- modulation du signal électrique représentatif des données numériques d'entrée en le signal optique, par le modulateur optique ;
- rotation des première et deuxième polarisations du signal optique par le module de rotation optique pour générer le signal optique tourné ;
- amplification du signal optique tourné par le module amplificateur pour générer le signal optique amplifié ;
- émission du signal optique amplifié par l'émetteur ;
- réception du signal optique amplifié par le récepteur, le signal optique amplifié reçu par le récepteur étant dit signal optique reçu ; et
- conversion du signal optique reçu en données numériques de sortie par le récepteur.

L'invention apparaîtra plus clairement à la lecture de la description qui va suivre, donnée uniquement à titre d'exemple non limitatif, et faite en référence aux dessins dans lesquels :
- [Fig. 1] la figure 1 est une représentation d'une chaîne de transmission selon l'invention,
- [Fig. 2] la figure 2 est un schéma bloc de la chaîne de transmission de la figure 1,
- [Fig. 3] la figure 3 est un schéma d'une partie de la chaîne de transmission de la figure 2,
- [Fig. 4] la figure 4 est un logigramme d'un procédé de transmission d'information selon l'invention, le procédé étant mis en œuvre par la chaîne de transmission de la figure 1.

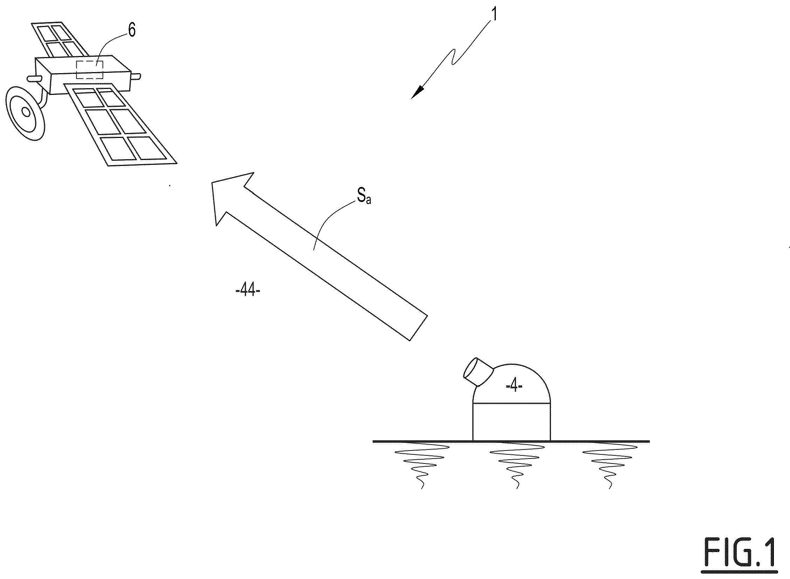

La figure 1 représente une chaîne de transmission 1 selon l'invention.

La chaîne de transmission 1 comprend un émetteur 4 et un récepteur 6.

L'émetteur 4 est avantageusement disposé au sol, par exemple dans une station de télécommunications.

Le récepteur 6 est avantageusement embarqué dans un aéronef ou un satellite.

En variante, c'est l'émetteur 4 qui est embarqué dans un aéronef ou un satellite et le récepteur 6 qui est au sol, par exemple dans une station de télécommunication. En variante encore, l'émetteur 4 et le récepteur 6 sont tous deux au sol.

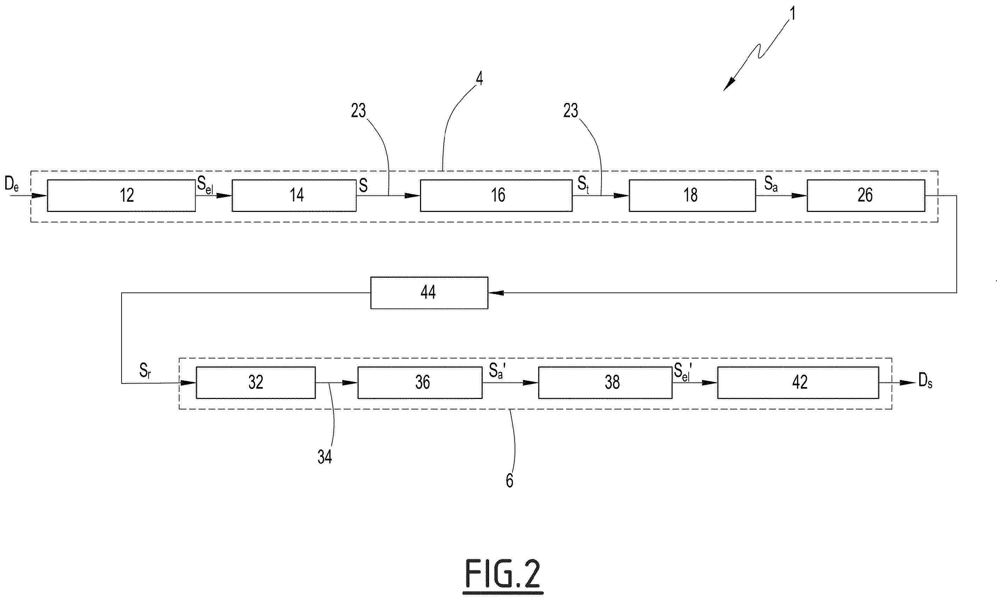

Comme cela est présenté sur la figure 2, l'émetteur 4 comprend avantageusement un module de traitement numérique 12. Le module de traitement numérique 12 est par exemple réalisé sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*). En variante non représentée, le module de traitement numérique 12 est réalisé sous la forme d'un logiciel, stocké dans une mémoire et exécutable par un processeur associé à la mémoire. De même en variante non représentée, le module de traitement numérique 12 est réalisé par des composants analogiques optiques.

L'émetteur 4 comprend en outre un modulateur optique 14, avantageusement connecté au module de traitement numérique 12. Le modulateur optique 14 est avantageusement un interféromètre de Mach-Zehnder à double polarisation, comprenant une source laser.

L'émetteur 4 comprend également un module de rotation optique 16, connecté au modulateur optique 14. Le module de rotation optique 16 est passif, et comprend par exemple un cristal biréfringent, une ou plusieurs lames quart d'onde, ou encore, un ou plusieurs rotateurs de Faraday. Par passif, on entend qui ne nécessite pas d'être alimenté par une source électrique pour fonctionner, à l'inverse d'un dispositif ou d'un module actif, qui a besoin d'être alimenté par une source électrique pour fonctionner.

L'émetteur 4 comprend en outre un module amplificateur 18, connecté au module de rotation optique 16.

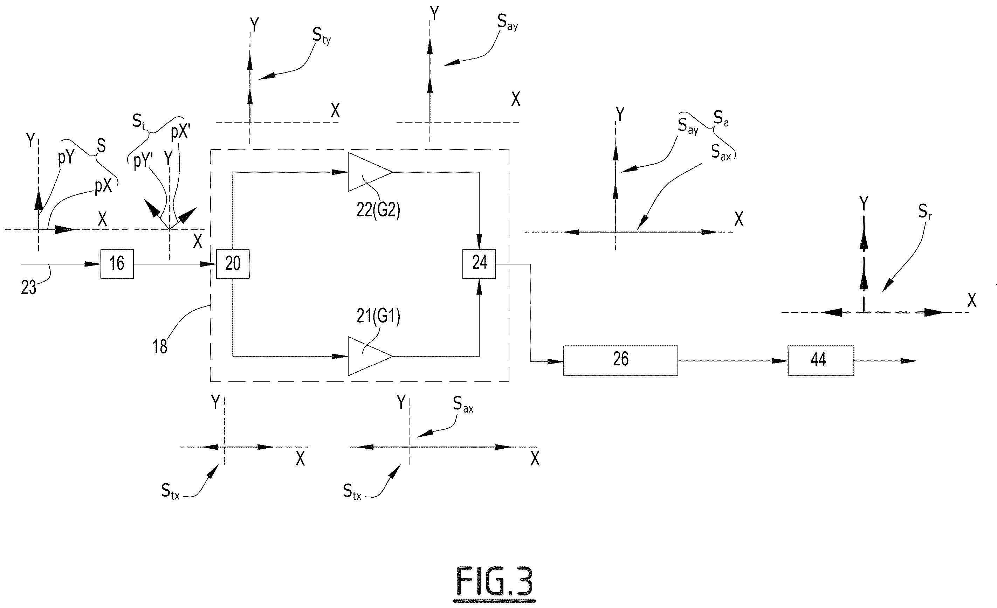

En référence à la figure 3, le module amplificateur 18 comprend un séparateur de faisceau de polarisation 20, aussi appelé PBS, de l'anglais « Polarization Beam Splitter ». De manière avantageuse, le séparateur de faisceau de polarisation 20 est un dispositif optique passif. Le séparateur de faisceau de polarisation 20 est configuré pour diviser un signal optique en deux composantes, avantageusement en deux composantes dont les axes de polarisation sont orthogonaux l'un à l'autre.

Le module amplificateur 18 comprend deux amplificateurs optiques 21 et 22. Les amplificateurs optiques 21 et 22 sont avantageusement des amplificateurs optiques à très haute puissance. Les amplificateurs optiques 21 et 22 sont configurés pour amplifier un signal optique qui les traverse respectivement avec un gain G1 un gain G2. Les gains G1 et G2 sont avantageusement prédéfinis et choisis par un fabriquant du module amplificateur 18. En théorie, les gains G1 et G2 sont choisis comme étant égaux. Cependant, à cause par exemple d'imperfections dans les amplificateurs optiques 21 et 22, de contraintes matérielles ou de l'environnement spatial, dans la pratique, les gains G1 et G2 sont différents.

Le module amplificateur 18 comprend en outre un combineur de faisceaux de polarisation 24, aussi appelé PBC, de l'anglais « Polarization Beam Combiner ». Le PBC 24 est avantageusement un dispositif optique passif. Le PBC 24 combine avantageusement deux composantes dont les axes sont orthogonaux en un même signal optique.

De manière avantageuse, le modulateur optique 14, le module de rotation 16, et l'amplificateur 18 sont connectés entre eux par des fibres à maintien de polarisation 23, aussi dites PMF, de l'anglais « Polarization-Maintaining Fibre ».

De manière avantageuse, l'émetteur 4 comprend une tête optique 26, également appelée module d'interface air, et également connue sous le nom anglais « optical front end » ou OFE. La tête optique 26 comprend de manière avantageuse un ou plusieurs des dispositifs suivants : un dispositif optique, un dispositif de pointage, un dispositif de collimation, un dispositif de couplage, ou encore des dispositifs de compensation ou de pré-compensation des turbulences atmosphériques. Ces dispositifs sont actifs ou passifs, et sont par exemple formés d'arrangements de lentilles et/ou de miroirs.

En référence à la figure 2, le récepteur 6 comprend avantageusement une tête optique 32. Cette tête optique 32 est avantageusement configurée pour recevoir un signal optique et pour le focaliser dans une fibre optique 34 qui relie avantageusement la tête optique 32 et un module amplificateur 36, inclus également dans le récepteur 6. Le module amplificateur 36 est avantageusement un amplificateur à faible bruit.

Le récepteur 6 comprend avantageusement un démodulateur optique 38 et un module de traitement numérique 42. Avantageusement, le module amplificateur 36 et le démodulateur optique 38 sont reliés entre eux également par une fibre optique 34.

Le démodulateur optique 38 est configuré pour convertir un signal optique en signal électrique, représentatif du signal optique. Avantageusement, le module de traitement numérique 12, le modulateur optique 14 d'une part, et le démodulateur optique 38 et le module de traitement numérique 42 d'autre part, correspondent les uns aux autres. Par exemple, le module de traitement numérique 12 et le modulateur optique 14 sont configurés pour générer un signal optique selon une modulation cohérente, et le démodulateur optique 38 et le module de traitement numérique 42 sont configurés pour effectuer des opérations qui permettent de démoduler un signal optique cohérent.

Le module de traitement numérique 42 est par exemple réalisé sous forme d'un composant logique programmable, tel qu'un FPGA (de l'anglais « Field Programmable Gate Array »), ou encore d'un circuit intégré, tel qu'un ASIC (de l'anglais « Application Specific Integrated Circuit »). En variante non représentée, le module de traitement numérique 42 est réalisé sous la forme d'un logiciel, stocké dans une mémoire et exécutable par un processeur associé à la mémoire. De même en variante non représentée, le module de traitement numérique 42 est réalisé via des composants optiques analogiques.

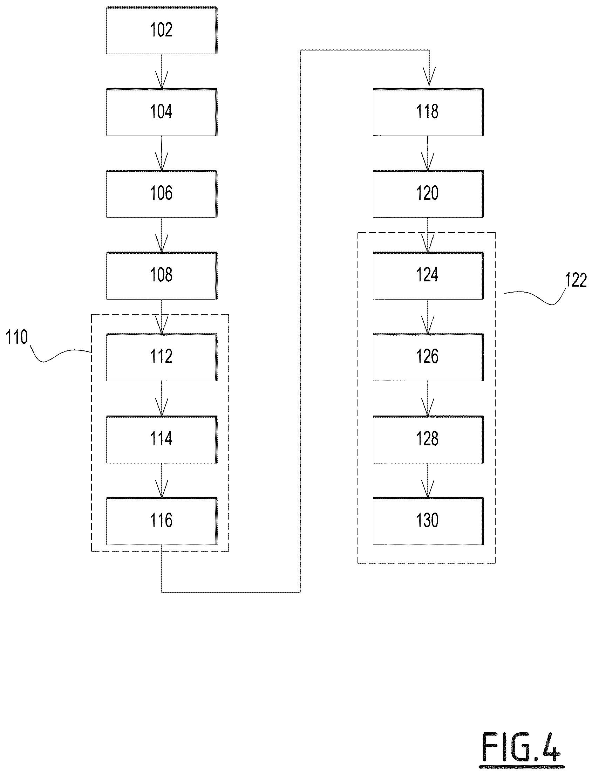

Un procédé de traitement d'information va être maintenant expliqué, en regard des figures 3 et 4. Ce procédé est mis en œuvre par la chaîne de transmission 1.

Le module de traitement numérique 12 reçoit avantageusement des données numériques d'entrée Dₑ lors d'une étape de réception 102. Les données numériques d'entrée Dₑ sont par exemple sous la forme d'un ou de plusieurs signaux électriques, qui encodent des informations, par exemple des bits d'information.

Le module de traitement numérique 12 convertit les données numériques d'entrée Dₑ en signal électrique Sₑₗ lors d'une étape de conversion 104. Le signal électrique Sₑₗ est représentatif des données numériques d'entrées Dₑ. Avantageusement, lors de l'étape de conversion 104, le module de traitement numérique 12 implémente par exemple des fonctions, ou des algorithmes, de correction d'erreurs, de pré-codage ou encore de mise en forme de trames de signal. Cela permet par exemple d'améliorer la transmission du signal électrique Sₑₗ, et de limiter les erreurs dans le signal électrique Sₑₗ, qui peuvent être dues par exemple à une mauvaise réception, ou une réception partielle des données numériques d'entrée Dₑ.

Le signal électrique Sₑₗ est transmis au modulateur optique 14 qui effectue une étape de modulation 106. L'étape de modulation 106 consiste en la génération d'un signal optique S, modulé, représentatif du signal électrique Sₑₗ et donc, des données numériques d'entrée Dₑ. Avantageusement, dans le cas où le modulateur optique 14 comprend un interféromètre de Mach-Zehnder à double polarisation comprenant une source laser, le signal électrique Sₑₗ est appliqué à la source laser, afin d'obtenir, en sortie du modulateur optique 14, le signal optique S. L'étape de modulation 106 est une étape de modulation dite double polarisation, c'est-à-dire que le signal optique S comprend deux polarisations selon deux axes de polarisation X et Y, appelées respectivement polarisation pX et polarisation pY. Les axes de polarisation X et Y sont avantageusement orthogonaux.

Le signal optique S est avantageusement transmis par le modulateur optique 14 au module de rotation 16 via la fibre à maintien de polarisation 23. Cela permet notamment d'empêcher une rotation involontaire ou un mélange des polarisations pX et pY entre elles lors de la transmission du signal optique S au module de rotation 16.

Lors d'une étape de rotation 108, le signal optique S transmis au module de rotation 16 est tourné par ce dernier, générant ainsi un signal optique tourné Sₜ. Plus précisément, les polarisations pX et pY sont tournées par le module de rotation 16 selon un angle de rotation compris strictement entre 0+kπ/2 et π/2+kπ/2, avec k un nombre entier. Le nombre entier k peut être positif, négatif ou nul. L'angle de rotation est ici exprimé en radians. L'angle de rotation est prédéfini par un fabricant de l'émetteur 4 et dépend du dispositif optique inclus dans le module de rotation 16, par exemple du type de cristal biréfringent, ou du rotateur de Faraday. L'angle de rotation, qui est prédéfini, est fixe dans le temps. De manière avantageuse, l'angle de rotation des polarisations pX et pY est compris entre π/6+kπ/2 et π/3+kπ/2, préférentiellement sensiblement égal à π/4+kπ/2 avec k un nombre entier. Par sensiblement égal à une valeur, on entend égal à cette valeur à plus ou moins 10%. Les polarisations pX et pY tournées sont notées pX' et pY'. Une rotation sensiblement égale à π/4+kπ/2 est obtenue par exemple à l'aide d'une lame quart d'onde, comprise dans le module de rotation 16. Ainsi, le signal optique tourné Sₜ comprend une polarisation pX' et une polarisation pY', tournées avantageusement de π/4+kπ/2 par rapport respectivement aux polarisations pX et pY du signal optique S.

Le signal optique tourné Sₜ est transmis au module amplificateur 18, avantageusement via la fibre à maintien de polarisation 23, afin d'empêcher une rotation involontaire des polarisations pX' et pY'.

Une étape d'amplification 110 est effectuée par le module amplificateur 18, afin de générer un signal optique amplifié Sₐ à partir du signal optique tourné Sₜ. L'étape d'amplification 110 comprend avantageusement des sous-étapes 112 à 116.

La sous-étape 112 est une sous-étape de séparation. Le signal optique tourné Sₜ est séparé par le séparateur de faisceau de polarisation 20 en deux composantes optiques selon deux axes de polarisation du séparateur 20. Les axes de polarisation du séparateur sont avantageusement confondus avec les axes de polarisation X et Y du signal optique S, ainsi que visible dans la figure 3. Dans la suite, on fera référence aux axes de polarisation X et Y, y compris pour désigner les axes de polarisation du séparateur 20. Ainsi, lors de la sous-étape de séparation 112, le signal optique tourné Sₜ est séparé en une composante optique Sₜₓ selon l'axe de polarisation X et une composante optique S_{ty} selon l'axe de polarisation Y. La composante optique Sₜₓ comprend les composantes des polarisations pX' et pY' selon l'axe de polarisation X, et la composante optique S_{ty} comprend les composantes des polarisations pX' et pY' selon l'axe de polarisation Y, ainsi que représenté à la figure 3.

Si à l'étape 108, les polarisations pX' et pY' sont tournées de 45 degrés par rapport aux axes de polarisation X et Y, alors lors de la sous-étape de séparation 112, les composantes des polarisations pX' et pY' projetées sur les axes de polarisation X et Y sont de même module. Ainsi, dans ce cas, les composantes optiques Sₜₓ et S_{ty} sont de même module.

Le séparateur de polarisation 20 transmet les composantes optiques Sₜₓ et S_{ty} aux amplificateurs 21 et 22.

Les amplificateurs 21 et 22 amplifient respectivement les composantes optiques Sₜₓ et S_{ty} lors de la sous-étape d'amplification des composantes 114. Plus précisément, l'amplificateur 21 amplifie la composante Sₜₓ selon le gain G1, générant ainsi une composante amplifiée Sₐₓ et l'amplificateur 22 amplifie la composante S_{ty} selon le gain G2, générant ainsi une composante amplifiée S_{ay}.

Le combineur de faisceaux de polarisation 24 effectue la sous-étape 116, qui est une sous-étape de combinaison. Lors de la sous-étape de combinaison 116, les composantes Sₐₓ et S_{ay} sont transmises au combineur de faisceaux de polarisation 24 qui les combine pour former le signal optique amplifié Sₐ. Cette transmission a lieu via une fibre optique, ou, en variante, en espace libre. Le signal optique amplifié Sₐ est représentatif du signal numérique Sₑₗ et donc des données d'entrée Dₑ.

Le signal optique amplifié Sₐ est ensuite avantageusement transmis à la tête optique 26, par exemple via une fibre optique, ou en variante, en espace libre. La tête optique 26 effectue une étape d'émission 118 du signal optique amplifié Sₐ dans un milieu de propagation 44, dit aussi canal de propagation. Avantageusement, lors de l'étape d'émission 118, la tête optique effectue une ou plusieurs des opérations suivantes, en fonction des dispositifs compris dans la tête optique 26 : une opération de pointage, de collimation, de compensation ou de pré-compensation, pour améliorer la qualité du signal amplifié Sₐ, et limiter les pertes ou la distorsion causées du signal amplifié Sₐ émis dans le milieu de propagation 44.

Le milieu de propagation 44 est par exemple une fibre optique, ou l'atmosphère dans le cas d'une transmission optique en espace libre, ainsi que représenté à la figure 1.

Le signal optique amplifié Sₐ est reçu par le récepteur 6 lors d'une étape de réception 120, de manière avantageuse, par la tête optique 32.

Le signal optique reçu par le récepteur 6 est dit signal optique reçu Sᵣ. Lors de l'émission du signal optique amplifié Sₐ dans le milieu de propagation 44, le signal optique amplifié Sₐ est atténué et ses composantes Sₐₓ et S_{ay} sont mélangées à cause par exemples d'inhomogénéités du milieu de propagation 44, ou dans le cas de l'atmosphère, des turbulences ou des variations de composition des couches de l'atmosphère. Ainsi, le signal optique amplifié Sₐ tel qu'émis par l'émetteur 4 et le signal optique reçu Sᵣ par le récepteur 6 ne sont pas identiques, ainsi que représenté à la figure 3.

Le récepteur 6 effectue une étape de conversion 122 du signal optique reçu Sᵣ en données numériques de sortie Dₛ. Pour cela, avantageusement, le récepteur 6 effectue les sous-étapes 124 à 130 suivantes.

Avantageusement, la tête optique 32 focalise le signal optique reçu Sᵣ lors de la sous-étape de focalisation 124 et le transmet au module d'amplification 36 via la fibre optique 34. Le module d'amplification 36 amplifie le signal optique reçu Sᵣ pour former un signal optique reçu amplifié Sₐ' lors de la sous-étape d'amplification 126.

Le module d'amplification 36 transmet le signal optique reçu amplifié Sₐ' au démodulateur optique 38, qui convertit le signal optique reçu amplifié Sₐ' en signal électrique reçu Sₑₗ' lors de la sous-étape de conversion 128. Le signal électrique reçu Sₑₗ' est transmis au module de traitement numérique 42 qui effectue la sous-étape de traitement 130, lors de laquelle il génère des données numériques de sortie Dₛ, représentatives des données numériques d'entrée Dₑ. Dans le cas où le signal optique reçu Sᵣ est un signal optique cohérent, le module de traitement numérique 42 implémente avantageusement un algorithme d'égalisation adaptatif, comme par exemple, l'algorithme de module constant, ou CMA de l'anglais « Constant Modulus Algorithm », un algorithme de synchronisation de porteuse et de trames, ou encore des algorithmes de décodage, afin de générer les données numériques de sortie Dₛ.

En variante non représentée, le signal optique comprend plusieurs longueurs d'ondes. La chaîne de transmission est alors modifiée comme suit. L'émetteur comprend un module de traitement numérique et un modulateur optique 14 par longueur d'onde, ainsi qu'un multiplexeur, reliant les modulateurs optique 14 et le module de rotation 16. Ainsi, un signal optique composé de plusieurs longueurs d'ondes est reçu par le module de rotation 16. Dans ce cas, avantageusement, le module de rotation 16 est un rotateur de Faraday dont la bande de longueurs d'ondes de fonctionnement est de plusieurs nanomètres, afin de tourner l'ensemble des longueurs d'ondes multiplexées.

En variante, le multiplexeur relie l'amplificateur 18 et la tête optique 26. Dans ce cas, l'émetteur comprend en outre un module de rotation 16 et un amplificateur 18 par longueur d'onde. Ainsi, dans ce cas, chaque longueur d'onde est tournée et amplifiée séparément avant d'être multiplexée.

Le récepteur 6 comprend alors également un démultiplexeur, qui est relié à la tête optique 32. Dans ce cas, le récepteur 6 comprend une pluralité d'amplificateurs 36, de démodulateurs optiques 38 et de modules de traitement numériques 42, un amplificateur 36 étant relié à un seul démodulateur optique 38, lui-même relié à un seul module de traitement numérique 42, et configurés pour recevoir et traiter une longueur d'onde donnée. En variante, le démultiplexeur est relié à l'amplificateur 36, et le récepteur 6 comprend seulement une pluralité de démodulateurs optiques 38 et de modules de traitement numériques 42, un démodulateur optique 38 étant relié à un seul module de traitement numérique 42 pour recevoir et traiter une longueur d'onde donnée.

Le procédé précédemment décrit est alors mis en œuvre par cette chaîne de traitement pour chaque longueur d'onde.

En pratique, une longueur d'onde donnée correspond à un signal optique dont une largeur spectrale est par exemple, inférieure à 1nm.

Ainsi, la chaîne de transmission 1 améliore la qualité de la transmission de données par signaux optiques, en limitant les différences d'amplification entre les deux composantes optiques Sₜₓ et S_{ty} du signal optique tourné Sₜ, de manière simple et sans augmenter la consommation d'électricité de l'émetteur 4.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Emetteur (4), configuré pour convertir des données numériques d'entrée (Dₑ) en signal optique amplifié (Sₐ) et pour émettre le signal optique amplifié (Sₐ), l'émetteur (4) comprenant :
- un modulateur optique (14), configuré pour moduler un signal électrique (Sₑₗ) représentatif des données numériques d'entrée (Dₑ) en un signal optique (S) comprenant une première polarisation (pX) selon un premier axe de polarisation (X) et une deuxième polarisation (pY) selon un deuxième axe de polarisation (Y), le signal optique (S) étant représentatif des données numériques d'entrée (Dₑ) ;
- un module de rotation optique (16), configuré pour générer un signal optique tourné (Sₜ) en effectuant une rotation des première et deuxième polarisations (pX, pY) du signal optique (S) selon un angle de rotation prédéfini, compris strictement entre 0+kπ/2 et π/2+kπ/2 , avec k un nombre entier ; et
- un module amplificateur (18), comprenant :
∘ un séparateur de faisceau de polarisation (20), configuré pour séparer le signal optique tourné (Sₜ) en une première composante optique (Sₜₓ) selon le premier axe de polarisation (X) et en une deuxième composante optique (S_{ty}) selon le deuxième axe de polarisation (Y);
∘ un premier amplificateur optique (21), configuré pour amplifier la première composante optique (Sₜₓ) selon un premier gain prédéfini (G1) ;
∘ un deuxième amplificateur optique (22), configuré pour amplifier la deuxième composante optique (S_{ty}) selon un deuxième gain prédéfini (G2) ; et
∘ un combineur de faisceaux de polarisation (24), configuré pour recevoir la première et la deuxième composantes optiques (Sₜₓ, S_{ty}), amplifiées respectivement par le premier et le deuxième amplificateur optique (21, 22), et pour les combiner en un signal optique amplifié (Sₐ).

2. Emetteur (4) selon la revendication 1, comprenant en outre un module de traitement numérique (12), configuré pour convertir les données numériques d'entrée (Dₑ) en le signal électrique (Sₑₗ), représentatif des données numériques d'entrée (Dₑ).

3. Emetteur (4) selon l'une quelconque des revendications 1 à 2, comprenant une tête optique (26) comprenant au moins l'un des dispositifs suivants : un dispositif de collimation, un dispositif de pointage et un dispositif de compensation de turbulences.

4. Emetteur (4) selon l'une quelconque des revendications 1 à 3, dans laquelle le modulateur optique (14) est configuré pour transmettre le signal optique (S) au module de rotation (16), et le module de rotation (16) est configuré pour transmettre le signal optique tourné (Sₜ) au module amplificateur (18) via une fibre à maintien de polarisation (23).

5. Emetteur (4) selon l'une quelconque des revendications précédentes 1 à 4, dans laquelle le module de rotation optique (16) comprend un cristal biréfringent.

6. Emetteur (4) selon l'une quelconque des revendications 1 à 5, dans laquelle l'angle de rotation est compris entre π/6+kπ/2 et π/3+kπ/2, préférentiellement sensiblement égal à π/4+kπ/2 avec k un nombre entier.

7. Récepteur (6), adapté pour recevoir le signal optique amplifié (Sₐ) émis par l'émetteur (4) de l'une quelconque des revendications 1 à 6, et pour le convertir en données numériques de sortie (Dₛ).

8. Récepteur (6) selon la revendication 7, comprenant :
- une tête optique (32), configurée pour recevoir le signal optique amplifié (Sₐ), le signal optique amplifié reçu étant dit signal optique reçu (Sᵣ) ;
- un module amplificateur (36), configuré pour amplifier le signal reçu (Sᵣ) en signal optique reçu amplifié (Sₐ') ;
- un démodulateur optique (38), configuré pour convertir le signal optique reçu amplifié (Sₐ') en un signal électrique reçu (Sₑₗ') ; et
- un module de traitement numérique (42), configuré pour implémenter un algorithme d'égalisation adaptatif et convertir le signal électrique reçu (Sₑₗ') en les données numériques de sortie (Dₛ).

9. Chaîne de transmission (1) comprenant l'émetteur (4) selon l'une quelconque des revendications 1 à 6 et le récepteur (6) selon l'une quelconque des revendications 7 et 8.

10. Procédé de transmission d'information, mis en œuvre par une chaîne de transmission (1) selon la revendication 9, le procédé comprenant au moins les étapes suivantes :
- modulation (106) du signal électrique (Sₑₗ) représentatif des données numériques d'entrée (Dₑ) en le signal optique (S), par le modulateur optique (14) ;
- rotation (108) des première et deuxième polarisations (pX, pY) du signal optique (S) par le module de rotation optique (16) pour générer le signal optique tourné (Sₜ) ;
- amplification (110) du signal optique tourné (Sₜ) par le module amplificateur (18) pour générer le signal optique amplifié (Sₐ) ;
- émission (118) du signal optique amplifié (Sa) par l'émetteur (4) ;
- réception (120) du signal optique amplifié (Sₐ) par le récepteur (6), le signal optique amplifié reçu par le récepteur (6) étant dit signal optique reçu (Sᵣ) ; et
- conversion (122) du signal optique reçu (Sᵣ) en données numériques de sortie (Dₛ) par le récepteur (6).
